# EUROPEAN PATENT APPLICATION

(11) **EP 3 435 276 A1**
(43) Date of publication of application: **30.01.2019**
(21) Application number: 17183533.3
(22) Date of filing: 27.07.2017
(51) Int. Cl.: G06K 9/00, G06T 7/70

(54) **PROCESSING AN IMAGE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

An image processor, system and method of processing an image, the method comprising receiving a first image; obfuscating the first image by dividing the first image into at least one sub-image; transmitting the at least one sub-image to at least one user device; receiving, from the or each user device, analysis data relating to the at least one sub-image; and processing the analysis data to provide an analysed image.

## Description

### Field

This specification relates generally to methods and apparatus for performing image analysis.

### Background

Increasingly, with new types of sensors available to military and security platforms, it is possible to rapidly collect and store vast quantities of imagery (otherwise known as Image Intelligence, or IMINT) and it is consequently becoming highly challenging for existing dedicated specialist image analysts to sift through and extract useful information from the totality of this data. Automated image processing algorithms can be employed to some extent to assist with this problem, but their performance is not yet comparable to that of humans looking at the same data.

Therefore, there is a need for a means of analysing imagery quickly without a reduction in the quality of the analysis. More particularly, there is a need for doing so with secure (or classified) imagery.

### Summary

According to an aspect of the present invention, there is provided a method of processing an image, comprising:
receiving a first image;
obfuscating the first image by dividing the first image into at least one sub-image;
transmitting the at least one sub-image to at least one user device;
receiving, from the or each user device, analysis data relating to the at least one sub-image; and
processing the analysis data to provide an analysed image.

Advantageously, the present invention provides a means to allow a plurality of untrained users to quickly analyse an image, reducing the burden on a trained imagery intelligence analyst. Furthermore, the present invention reduces the security level of transmitted images such that they can be analysed by users not having a high level of security clearance.

The analysis data may be a respective sub-image in which at least one object in the sub-image is labelled. Processing the analysis data may comprise constructing a second image using the received sub-image.

Alternatively, the analysis data may be a list of selected object categories within a respective sub-image.

Obfuscating the first image may comprise applying a transform function to the first image. The method may comprise detecting objects in the first image and applying a transform function to each of the detected objects. The transform function comprises homomorphic encryption.

The first image may be synthetic aperture radar imagery or hyperspectral imagery.

The method may comprise transmitting the analysed image to a display terminal.

Obfuscating the image may comprise sub-dividing the first image twice to create a first set of sub-images and a second set of sub-images, wherein the second set of sub-images may be arranged such that the intersection of the four vertices of a sub-image of the second image set intersect in the middle of a sub-image of the first image set.

The method may comprise transmitting a threshold number of sub-images to each of the at least one user devices.

According to a second aspect of the present invention, there is provided an image processor comprising:
a controller configured to receive a first image and obfuscate the first image by dividing the first image into at least one sub-image; and
a transceiver for transmitting the at least one sub-image to at least one user device and receiving, from the or each user device, analysis data relating to the at least one sub-image;
wherein the controller is further configured to process the analysis data to provide an analysed image.

The controller may be configured to apply a transform function to the first image.

The transform function may be a homomorphic encryption.

According to a third aspect of the present invention, there is provided a system comprising the image processor according to the second aspect and at least one user device comprising:
an interface configured to receive at least one sub-image from the image processor;
a user input configured to receive a user selection of an object category in order to provide analysis data,
wherein the interface is further arranged to transmit the analysis data to the image processor.

The system may further comprise a display terminal configured to receive and display the analysed image.

### Brief Description of the Drawings

Embodiments will now be described, by way of non-limiting example, with reference to the accompanying drawings, in which:
Figure 1 is a schematic representation of an image analysis scenario according to embodiments of the present invention;
Figure 2 is a system diagram of an image processor as shown in Figure 1;
Figure 3 is a system diagram of a user device as shown in Figure 1; and
Figure 4 is a flow diagram showing method steps of an image analysis process according to embodiments of the present invention.

### Detailed Description of Embodiments

Embodiments herein relate generally to systems and methods relating to processing an image such as satellite imagery, imagery from an aircraft, or imagery collected from smartphones or bodyworn cameras. In some embodiments, the image is divided into a plurality of smaller sub-images. In other words, the sub-images, when combined, form the image. The sub-images are transmitted to a plurality of user devices, which allow users to label or indicate the type of objects they see in the received sub-images. Data (such as the labelled sub-image or a list of object categories) from the user devices is then transmitted to an image processor, where the data is collated and associated with the original image. The original image can then be presented with additional information and confidence levels for that information. For example, 75% of members of the public (i.e. non-specialists) reviewing one sub-image might have identified an object in that sub-image to be a main battle tank (MBT), while 25% might have identified the same object as a tracked armoured personnel carrier (APC). This reduces the burden on the trained image analyst (i.e. an intelligence officer), particularly as it alleviates the need for them to look at the image as a whole so they can instead focus on the areas where objects have been identified by other users. Either the image processor or the trained image analysts are then able to perform further processing on the analysed image, such as geo-referencing the objects or delivering a report.

In some embodiments, where the image is classified, the original image is left at its original resolution but features in it that are detected by a simple automatic target detection algorithm are transformed before being sent to user devices. The automatic target detection algorithm detects objects of a particular size as they stand out from the background as an anomaly. The image processor does not know nor need to know what the object actually is, only that there is an object that should be obscured. This allows users who do not hold security clearance to analyse a classified image.

In other embodiments, the original image is sub-divided into many smaller squares or rectangles where each of these sub-images is several times larger than the expected targets or objects of interest. For example, if it is required for the members of the public (users of the user devices) to classify types of vehicle the sub-image should be sized two or three times that of a truck (or the largest expected vehicle or object of interest). When the image is sub-divided in this way there is a risk of chopping in half or at worst into quarters the object of interest and therefore in a preferred embodiment the original image is sub-divided twice, creating two sets of sub-images where the second set is arranged so that the intersection of the 4 vertices of a square sub-image in the second image set intersect in the middle of a square sub-image of the first image set. This tends to mitigate the risk of missing some objects because they are chopped up across sub-images. Alternatively, an automatic target detection algorithm is used to detect objects of interest and therefore optimise how the image is sub-divided to avoid cutting up the objects in multiple sub-images. These embodiments allow users who do not hold security clearance to analyse the sub-images, which can then be recombined to recreate the original image.

The invention will now be explained in more detail with reference to the drawings.

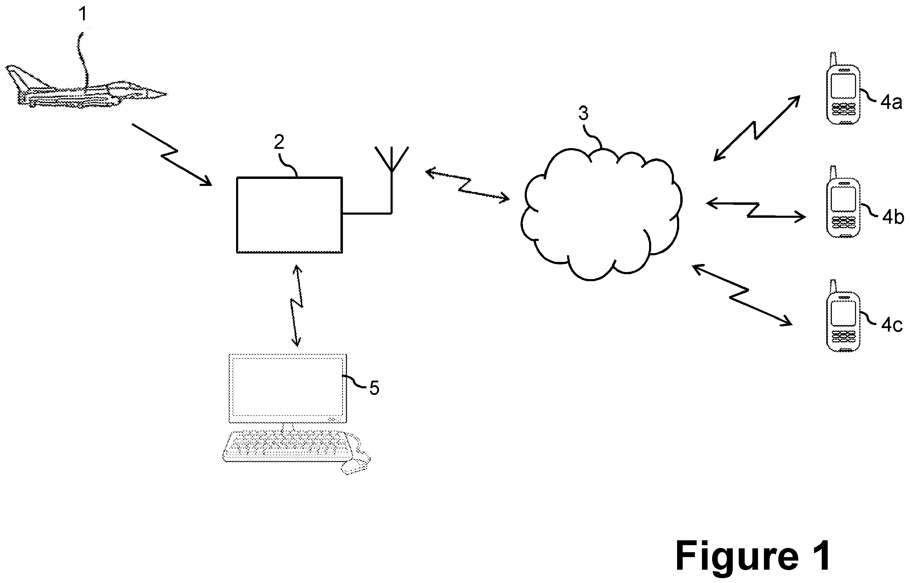

Referring to Figure 1, a system is shown for analysing an image. The image may be a frame of a video, or a photograph. The image may also be hyperspectral imagery or synthetic aperture radar (SAR) imagery. Specifically, the image is obtained as part of an Intelligence, Surveillance, Target Acquisition and Reconnaissance (ISTAR) process and is of an environment such as a battlefield (be it land or at sea). The image is obtained from a platform 1 such as an aircraft, satellite, ground vehicle or dismounted soldier.

The image is transmitted to an image processor 2. In the example shown in Figure 1, the image is wirelessly transmitted to the image processor 2 directly from the platform 1. This is useful where immediate analysis is necessary, such as when a strike mission is taking place, or where the platform 1 is a satellite. The platform 1 and image processor 2 may be coupled by an encrypted datalink. In further embodiments, the image is retrieved from the platform 1 using a cable or portable drive.

The image processor 2 is in wired or wireless communication with a display terminal 5. The display terminal 5 may be a passive LCD or LED monitor. However, in other embodiments the display terminal 5 is a computer or laptop having a user input for allowing a user to manipulate images or generate further data using the images. Particularly, the display terminal 5 receives an analysed image from the image processor 2 and provides a means for a specialist image analyst to perform further processing on the image. The analysed image is presented to the specialist image analyst, in some embodiments, with confidence levels for each of the object categories selected by users.

In further embodiments, the image processor 2 is integrated with the platform 1. For example, the platform 1 is an intelligence-gathering aircraft such as the Sentinel R1 having a number of on-board specialist image analysts. In these embodiments, the image processor 2 and the display terminal 5 form a single integrated device.

The image processor 2 communicates with a plurality of user devices 4a-c through a network 3. The network 3 is a wide area network such as the internet, such that a plurality of users having large geo-spatial dispersion can receive data from the image processor 2. Alternative networks 3 include local area networks. The image processor 2 communicates with the network 3 through a wired or wireless connection. In some embodiments, the image processor 2 transmits declassified sub-images to the network 3 through an Ethernet link.

In some embodiments, the network 3 is an end-to-end secure network. Here, transmitters/receivers in user devices 4a-c and the image processor 2 are arranged to respectively encrypt and decrypt transmitted and received signals.

In alternative embodiments, the user devices 4a-c communicate with the image processor 2 using peer-to-peer communication, such as Bluetooth. Here, the network 3 is not necessary in the system.

Each user device 4a-4c is a mobile device such as a mobile phone. In other embodiments, the user devices 4a-c may each take different forms, and may include fixed devices such as desktop computers. The user devices 4a-4c include software for allowing their respective users to select and record object categories of objects in sub-images received through the network 3.

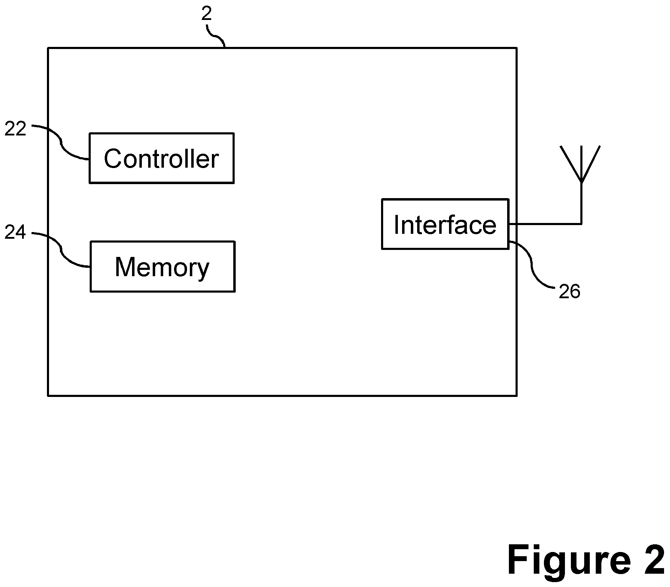

Figure 2 shows an example schematic diagram of components of an image processor 2 according to embodiments of the present invention. The image processor 2 includes a controller 22, memory 24 and an interface 26. The interface 26 shown here is a wireless interface such as a WiFi, LTE or UMTS interface; however, it would be readily appreciated that the interface may be a wired interface such as USB, HDMI or Ethernet.

The memory 24 may be a non-volatile memory such as read only memory (ROM), a hard disk drive (HDD), or a solid state drive (SSD). The memory 24 stores, amongst other things, an operating system and software applications. The memory 24 also includes RAM used by the controller 22 for the temporary storage of data. The operating system may contain code which, when executed by the controller 22 in conjunction with RAM, controls operation of each of the hardware components of the image processor 2.

The controller 22 may take any suitable form. For instance, it may be a microcontroller, plural microcontrollers, a processor, or plural processors.

The controller 22 is configured to process imagery, such as hyperspectral imagery, a photograph or video stream. When an image is received, the controller 22 separates the image into a number of smaller sub-images. This effectively obfuscates (or obscures) the data in the image, as anyone receiving one sub-image will not be able to infer much information about the original image. Where an image is classified, the image processor 2 prevents any one user from receiving more than a threshold number of sub-images such that they cannot recreate enough of the original image to establish what it represents. For example, the threshold may be set to 1 sub-image. Users are identified using at least one of their login details or associated device 4a-c identifiers (such as MAC or IP address). In some embodiments, the controller 22 is further configured to perform a non-reversible transfer function (i.e. a convolution) such as homomorphic encryption in order to further improve security of image. When the transfer function has been applied, the image is no longer recognisable as the original image (and is hence unclassified), but retains the relative patterns and positioning of objects from the original image in order to allow detections or classifications of similar objects. In other words, spatial information is preserved but transformed.

In homomorphic encryption, noise (randomness) is inserted in the encryption process so the encrypted sub-image would contain far more information than the plain image. According to some embodiments, the original image data is converted into a string. Homomorphic encryption is then applied to the string. The encrypted string is then transmitted to a user device 4a-c and converted back into an image at the user device 4a-c.

While applying a transform function to the image is described above, in other embodiments the transform function is applied to individual objects within the image. In other words, the image processor 2 first detects objects using an automatic target detection algorithm and then applies a transform function to each object such that the object is not identifiable in its original form. To obfuscate the object, the geometry of the object is altered in a predetermined and consistent manner, such that another object of the same size and shape is obfuscated in the same way. The sub-images having the transformed objects are then transmitted to user devices 4a-c to allow users to classify the transformed objects into a particular class or category.

According to some embodiments, the image processor 2 includes a display apparatus and user input device. In other words, the display terminal 5 is integrated with the image processor 2.

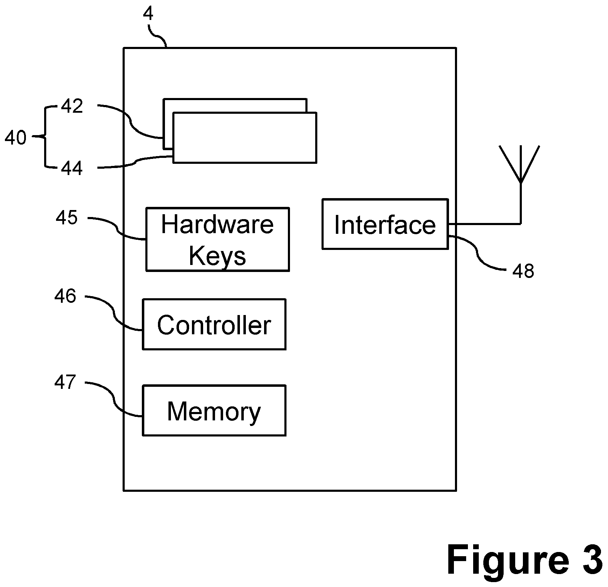

Figure 3 shows an example schematic diagram of components of a user device 4 according to embodiments of the present invention. While a wireless device is depicted, it would be appreciated that the user device 4 in some embodiments is a wired device such as a desktop computer. The user device 4 has a controller 46, a touch sensitive display 40 comprised of a display part 42 and a tactile interface part 44, hardware keys 45, a memory 47 and an input interface 48. The controller 46 is connected to each of the other components in order to control operation thereof. The touch sensitive display 40 is optional, and as an alternative a conventional display may be used with the hardware keys 45 and/or a mouse peripheral used to control the user device 4 by conventional means.

The interface 48 may be a wired or wireless interface arranged to be coupled to the network 3. The interface 48 may, for example, be a WiFi, LTE, or UMTS transceiver.

The display part 42 presents an enjoyable game-like interface, with scores or other forms of user reward feedback provided when a user classifies an object in a sub-image in order to incentivise users to take part in the analysis of sub-images. A received sub-image is displayed on the display part 42, and the tactile interface part 44 allows a user to positively identify objects in the sub-image. Classifying objects may comprise selecting an object category from a drop-down list or typing in the object category using a soft keyboard. The categorised objects in some embodiments are entered into a list to be transmitted to the image processor 2. In other embodiments, the categorised objects are appended to the sub-image such that the sub-image displays object category labels co-located with the object. In some embodiments, where the object has been obfuscated by the image processor 2, the user of the user device 4a-c is presented with a list of shapes and associated arbitrary categories (e.g. Type A, Type B, Type C). For each obfuscated object, they classify it by selecting the category having the shape most like that of the obfuscated object. Only the specialist image analyst will be able to translate the arbitrary category into the real-life object category.

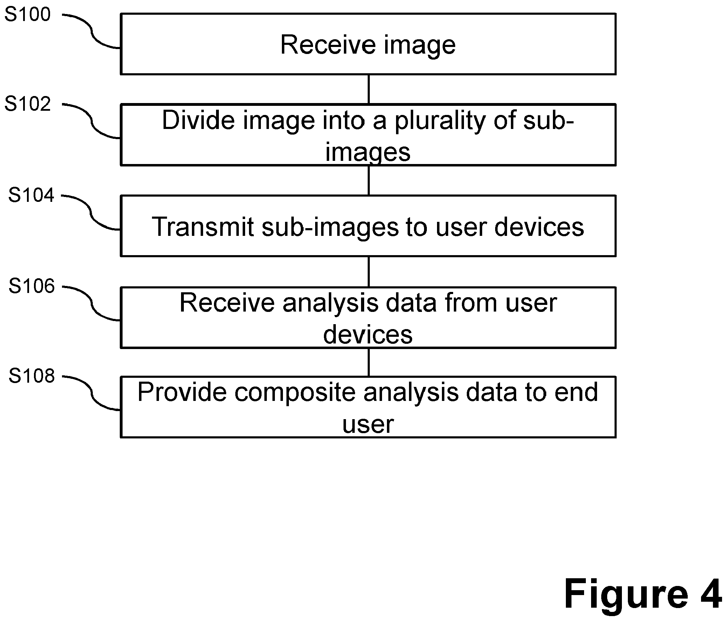

A method of analysing an image will now be described with reference to Figure 4. In step S100, an image is received by an image processor 2 from a platform 1. The image is received in a secure manner, such as via an encrypted data link. The image is a high resolution image of an environment, and may include several images (or frames) stitched together.

In step S102, the image processor 2 encrypts the image by dividing it into a plurality of sub-images. In some embodiments, this process involves dividing the image into a plurality of sub-images of equal size which, when recombined, form the image. In other embodiments, the image processor 2 detects objects in the image and divides the image into sub-images each containing one of the objects. In other words, in these embodiments, the image processor 2 ignores areas of the image not having an object contained therein when dividing the image.

The image processor 2 encodes each sub-image with reference information identifying the image from which it was formed and where in that image the sub-image came from. This enables the image processor 2 to recombine the sub-images once they have been analysed.

In further embodiments, the encryption process includes applying a transform function to the image in order to declassify it. The declassified image is then divided into sub-images. Alternatively, the image is first divided into sub-images, and then a transform function is applied to each sub-image.

In some embodiments, dividing the image into sub-images is a process independent of the content of the image. In other words, each received image is divided equally. However, in other embodiments, the image processor 2 performs an initial parsing of the image to determine whether and where objects are located, and then the image is divided according to the location of those objects. For example, a large area having no detected objects might be assigned as a first sub-image, while a small area around a vehicle of indeterminate type might be assigned as a second sub-image.

In step S104, the image processor 2 transmits the sub-images to user devices 4a-c. These user devices 4a-c may belong to untrained image analysts, or members of the public. By sending parts of the image to multiple users for object classification, the trained image analyst is able to focus on the more burdensome task of assessing the situation and threat as a whole represented by the image.

In some embodiments, the same sub-image is transmitted to a plurality of user devices 4a-c. This improves the certainty of an object classification. In some embodiments, all of the sub-images are sent to the same user device 4. This enables the user of the user device 4 to break down the process of analysing the image into more manageable parts and perform the analysis of each sub-image in their own time. The software on the user device 4 provides the user with a score or reward every time a sub-image is analysed or object identified in order to motivate them to continue.

Finally, in preferred embodiments, each of the plurality of sub-images are sent to separate user devices 4a-c.

The sub-images are transmitted via the network 3, such as the internet. In some embodiments, the transmission is secure and encrypted.

In step S106, analysis data is received from the user devices 4a-c. The analysis data is, for example, the respective sub-image having objects labelled therein by the user of the respective user device 4. The label may include a confidence level indicating how certain the user is of their identification. Alternatively, the analysis data is a list of object types (or, in other words, classifications/categories) selected by the user and an indicator of the sub-image in which they are contained, or a set of geospatial coordinates or other location identifier. This reduces the burden on the trained image analyst as it allows them to turn their attention only to those sub-images identified as containing an offensive object such as a tank.

The analysis data is received via the network 3.

In step S108, the image processor 2 provides analysis data to a trained image analyst. The analysis data may be presented to the image analyst by transmitting it to a display terminal 5, or in alternative embodiment the image processor 2 has an inbuilt display apparatus for displaying the analysis data. The analysis data is a composite, i.e. an amalgamation of the analysis data received from each of the user devices 4a-c. For example, the composite analysis data is the original image with the addition of labels (i.e. the analysed sub-imaged recombined). In other embodiments, the composite analysis data is a single list of object types listed in each of the lists of object types received from the user devices 4a-c along with location identifiers such as geospatial coordinates or an identifier of the part of the image containing the respective sub-image. When the image is classified, the image analyst relabels the object categories selected by the users into the object categories that are true to life. For example, when "category A" has been selected for a particular shape of obfuscated object, image analyst may change this to "main battle tank" for one object. The image processor 2 then changes all objects listed in category A to be labelled as main battle tanks.

The step of providing the composite analysis data may comprise adding a level of certainty (or confidence threshold) to each object type. This step may include comparing analysis data received from different user devices 4a-c in respect of the same sub-image. Alternatively, this step may comprise comparing shapes of analysed objects in different sub-images and, if the shapes are significantly similar, determining whether the object type determined by users is the same for each object.

The trained image analyst is then able to perform further analysis on the composite analysis data. For example, the display terminal 5 provides an input means for the image analyst to confirm the identity of objects having a low confidence threshold.

It will be appreciated that the above described embodiments are purely illustrative and are not limiting on the scope of the invention. Other variations and modifications will be apparent to persons skilled in the art upon reading the present application. Particularly, it would be readily apparent to the skilled person that aspects of the present invention could be modified for use in the medical domain.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

## Claims

1. A method of processing an image, comprising:
receiving a first image;
obfuscating the first image by dividing the first image into at least one sub-image;
transmitting the at least one sub-image to at least one user device;
receiving, from the or each user device, analysis data relating to the at least one sub-image; and
processing the analysis data to provide an analysed image.

2. The method according to claim 1, wherein the analysis data is a respective sub-image in which at least one object in the sub-image is labelled.

3. The method according to claim 2, wherein processing the analysis data comprises constructing a second image using the received sub-image.

4. The method according to claim 1, wherein the analysis data is a list of selected object categories within a respective sub-image.

5. The method according to any one of the preceding claims, wherein obfuscating the first image comprises applying a transform function to the first image.

6. The method according to claim 5, comprising detecting objects in the first image and applying a transform function to each of the detected objects.

7. The method according to claim 5 or claim 6, wherein the transform function comprises homomorphic encryption.

8. The method according to any one of the preceding claims, wherein the first image is synthetic aperture radar imagery or hyperspectral imagery.

9. The method according to any one of the preceding claims, comprising transmitting the analysed image to a display terminal.

10. The method according to any one of the preceding claims, wherein obfuscating the image comprises sub-dividing the first image twice to create a first set of sub-images and a second set of sub-images, wherein the second set of sub-images is arranged such that the intersection of the four vertices of a sub-image of the second image set intersect in the middle of a sub-image of the first image set.

11. The method according to any one of the preceding claims, comprising transmitting a threshold number of sub-images to each of the at least one user devices.

12. An image processor comprising:
a controller configured to receive a first image and obfuscate the first image by dividing the first image into at least one sub-image; and
a transceiver for transmitting the at least one sub-image to at least one user device and receiving, from the or each user device, analysis data relating to the at least one sub-image;
wherein the controller is further configured to process the analysis data to provide an analysed image.

13. The image processor according to claim 11, wherein the controller is configured to apply a transform function to the first image.

14. A system comprising the image processor according to any one of claims 12 to 13 and at least one user device comprising:
an interface configured to receive at least one sub-image from the image processor;
a user input configured to receive a user selection of an object category in order to provide analysis data,
wherein the interface is further arranged to transmit the analysis data to the image processor.

15. The system according to claim 14, further comprising a display terminal configured to receive and display the analysed image.
